# EUROPÄISCHE PATENTSCHRIFT

(11) **EP 2 412 848 B1**
(45) Veröffentlichungstag und Bekanntmachung des Hinweises auf die Patenterteilung: **28.03.2018**
(21) Anmeldenummer: 11164886.1
(22) Anmeldetag: 05.05.2011
(51) Int. Cl.: C25D 5/14, C25D 5/50, C25D 7/00, C21D 1/673, B32B 15/01, C21D 8/02, C21D 8/04, C21D 9/48, C21D 1/18

(54) **Verfahren zum Herstellen eines Blechformteils aus einem höherfesten Stahlblechmaterial mit einer elektrolytisch aufgebrachten Zink-Nickel-Beschichtung**
Method for producing a sheet metal part from a high tensile sheet metal material with a zinc-nickel coating applied by means of electrolysis
Procédé de fabrication d'une pièce moulée en tôle à partir d'un matériau en tôle d'acier hautement résistant doté d'un revêtement en zinc-nickel appliqué de manière électrolytique

(30) Priorität: 24.06.2010 DE 102010030465
(43) Veröffentlichungstag der Anmeldung: 01.02.2012
(73) Patentinhaber: Bayerische Motoren Werke Aktiengesellschaft, 80809 München (DE)
(72) Erfinder: Dr.Gaßner, Franz, 86561, Oberlauterbach (DE); Kapfer, Andreas, 80687, München (DE)

(56) Entgegenhaltungen:
- WO-A1-2011/052797
- DE-A1-102005 055 374
- US-A- 4 282 073
- US-A- 4 775 599
- US-A- 5 290 370
- US-A1- 2005 189 231
- US-A1- 2008 202 638
- US-B1- 7 514 153

## Beschreibung

Die Erfindung betrifft ein Verfahren zum Herstellen eines mit einer Korrosionsschutzbeschichtung versehenen und aus einem höherfesten Stahlblechmaterial gebildeten Blechformteils. Die Erfindung betrifft ferner ein warmumgeformtes und insbesondere pressgehärtetes Blechformteil mit einer Korrosionsschutzbeschichtung.

Insbesondere im Kraftfahrzeugbau werden zunehmend Blechformteile aus einem höherfesten Stahlblechmaterial eingesetzt, um einerseits den steigenden Sicherheitsanforderungen gerecht zu werden und andererseits Leichtbaukriterien zu erfüllen. Das Bereitstellen solcher Blechformteile mit einer beanspruchungsgerechten Korrosionsschutzbeschichtung ist seit Längerem Gegenstand zahlreicher Entwicklungen. Stellvertretend wird diesbezüglich auf die den nächstliegenden Stand der Technik bildende DE 10 2005 055 374 A1 hingewiesen, die ein warmumgeformtes und pressgehärtetes Bauteil aus hochfestem Stahl mit einer durch Sherardisieren aufgebrachten Korrosionsschutzschicht aus Zink beschreibt, wobei insbesondere auch auf deren einleitenden Teil verwiesen wird.

Zum Stand der Technik wird ferner auf die Patentschriften US 2008/0202638 A1, US 4,282,073 A und US 2005/0189231 A1 hingewiesen.

Die Aufgabe der Erfindung ist es, eine alternative Möglichkeit zum Herstellen eines Blechformteils, das aus einem höherfesten Stahlblechmaterial besteht und das eine Korrosionsschutzbeschichtung aufweist, anzugeben, um mit dem Stand der Technik einhergehende Nachteile zu vermeiden.

Diese Aufgabe wird gelöst durch ein erfindungsgemäßes Verfahren mit den Merkmalen des Anspruchs 1. Die Lösung der Aufgabe erstreckt sich gemäß dem nebengeordneten Anspruch auch auf ein Blechformteil. Vorteilhafte und bevorzugte Weiterbildungen sind Gegenstand der jeweils abhängigen Ansprüche.

Das erfindungsgemäße Verfahren dient dem Herstellen eines mit einer Korrosionsschutzbeschichtung versehenen und aus einem höherfesten Stahlblechmaterial gebildeten Blechformteils. Es umfasst zumindest die folgenden Schritte:
- Umformen eines bereitgestellten Ausgangsblechmaterials zu einem Blechformteil;
- Ausbildung der Korrosionsschutzbeschichtung durch elektrolytisches Aufbringen einer Zink-Nickel-Beschichtung auf das Blechformteil, wobei zu Beginn des Beschichtungsvorgangs zunächst eine dünne Nickelschicht (auf dem Blechformteil) abgeschieden wird, die im Weiteren eine Wasserstoffversprödung des Stahlblechmaterials verhindert.

Ein nach dem erfindungsgemäßen Verfahren hergestelltes Blechformteil ist aus einem höherfesten Stahlblechmaterial gebildet. Unter einem höherfesten Stahlblechmaterial wird ein Blechmaterial aus einem Stahlwerkstoff verstanden, dessen Zugfestigkeit mindestens 800 MPa, bevorzugt mindestens 900 MPa, besonders bevorzugt mindestens 1000 MPa und insbesondere mindestens 1100 MPa beträgt. Die Bezeichnung "höherfestes Stahlblechmaterial" umfasst somit auch hoch- und höchstfeste Stahlblechmaterialien.

Bevorzugt ist vorgesehen, dass es sich bereits bei dem Ausgangsblechmaterial um ein höherfestes Stahlblechmaterial handelt. Hierunter ist zu verstehen, dass der Stahlwerkstoff des Ausgangsblechmaterials bereits höherfeste Eigenschaften aufweist. Höherfeste Stahlwerkstoffe sind z. B. Mehrphasenstähle, wie insbesondere CP-Stähle, Dualphasenstähle und TRIP-Stähle, und Martensitphasenstähle. Insbesondere ist jedoch vorgesehen, dass die höherfesten Eigenschaften erst im Verlaufe des erfindungsgemäßen Verfahrens herausgebildet bzw. erworben werden, bspw. durch einen Härtevorgang und insbesondere durch einen Presshärtevorgang, wie nachfolgend noch näher erläutert. Bevorzugter Weise handelt es sich bei dem verwendeten Stahlblechmaterial um ein Feinblech mit einer Blechstärke von ≤ 3,0 mm, bevorzugt von ≤ 2,0 mm, besonders bevorzugt von ≤ 1,5 mm und insbesondere von ≤ 1,0 mm.

Ein nach dem erfindungsgemäßen Verfahren hergestelltes Blechformteil ist insbesondere ein Bauteil für ein Kraftfahrzeug, wie nachfolgend noch näher erläutert. Bei dem Blechformteil kann es sich jedoch auch um ein weiter zu verarbeitendes Halbzeug handeln, wie z. B. ein Profilteil oder dergleichen. Das Umformen des Ausgangsblechmaterials zum Blechformteil erfolgt bevorzugt in einem Tiefziehvorgang oder einem hierzu vergleichbaren Vorgang. Der Tiefziehvorgang kann mehrere Umformstufen umfassen.

Ein wesentlicher Aspekt der Erfindung ist darin zu sehen, dass nach dem Umformen des Ausgangsblechmaterials zum Blechformteil ein elektrolytisches Aufbringen einer Zink-Nickel-Beschichtung auf das Blechformteil erfolgt, was der Ausbildung einer beanspruchungsgerechten Korrosionsschutzbeschichtung dient. Unter einem "elektrolytischen Aufbringen" wird das galvanische Beschichten durch elektrochemisches Abscheiden von metallischen Niederschlägen bzw. Überzügen auf dem Blechformteil verstanden. Die Zink-Nickel-Beschichtung wird zumindest bereichsweise auf das Blechformteil aufgebracht. Bevorzugt ist vorgesehen, dass die Zink-Nickel-Beschichtung vollflächig und insbesondere auf beiden Blechseiten und den Umlaufkanten (Schnittkanten, Sichtkanten) des Blechformteils aufgebracht wird. Das mit der Zink-Nickel-Beschichtung versehene Blechformteil weist eine sehr gefällige optische Erscheinung auf und kann daher z. B. auch im Sichtbereich eingesetzt werden.

Die aufgebrachte Zink-Nickel-Beschichtung besteht aus einer dünnen, direkt auf dem Stahlblechmaterial abgeschiedenen reinen Nickelschicht (unbeachtlich etwaiger Verunreinigungen), die bevorzugt eine Stärke von nur wenigen Nanometern aufweist, und einer darüber befindlichen Deckschicht aus einer Zink-Nickel-Mischphase. Die Deckschicht umfasst im Wesentlichen die Legierungsbestandteile Zink (Zn) und Nickel (Ni), wobei ergänzend auch weitere Legierungsbestandteile vorgesehen sein können. Bevorzugt ist z. B. eine Zink-Nickel-Mischphase mit 85-90 Gew.-% Zink (Zn) und 10-15 Gew.-% Nickel (Ni).

Ein wesentlicher Aspekt der Erfindung ist auch darin zu sehen, dass zu Beginn des Beschichtungsvorgangs zunächst eine dünne Nickelschicht auf der Oberfläche des metallisch blanken Blechformteils abgeschieden wird, die im Weiteren eine Wasserstoffversprödung des Stahlblechmaterials verhindert. Die Formulierung "im Weiteren" bezieht sich vorrangig auf den weiteren elektrolytischen Beschichtungsvorgang. Die anfänglich abgeschiedene dünne Nickelschicht katalysiert eine Rekombination des bei der Elektrolyse entstehenden atomaren Wasserstoffs zu (unkritischem) molekularen Wasserstoff. Dieser ist dann nicht mehr in der Lage, in das Stahlblechmaterial einzudringen und dieses zu verspröden. Die anfänglich abgeschiedene dünne Nickelschicht verhindert aber auch eine Wasserstoffversprödung zu einem späteren Zeitpunkt.

Vor allem wegen des typischerweise beim elektrolytischen Beschichten eingebrachten Wasserstoffs wurden bislang insbesondere sicherheitsrelevante Blechformteile aus einem höherfesten Stahlblechmaterial nicht elektrolytisch beschichtet und insbesondere nicht elektrolytisch verzinkt. Dies gilt insbesondere für warmumgeformte und/oder pressgehärtete Blechformteile für den Kraftfahrzeugbau.

Das erfindungsgemäße Verfahren kann weitere, im Einzelnen hier nicht erläuterte Schritte und Zwischenschritte umfassen, wie z. B. das Reinigen und/oder Beschneiden der Blechformteile vor und/oder nach dem Umformen.

Ein wesentlicher Vorteil der Erfindung ist darin zu sehen, dass das Umformen mit einem blanken (unbeschichteten) Ausgangsblechmaterial erfolgen kann, wodurch sich der Umformvorgang verhältnismäßig einfach gestalten lässt. Da das Aufbringen der Korrosionsschutzbeschichtung dem Umformen nachfolgt, bleiben auch etwaige aus der Umformung herrührende Beschädigungen der Korrosionsschutzbeschichtung aus, während solche Beschädigungen bei Verwendung von Ausgangsblechmaterialien mit einer Korrosionsschutzbeschichtung fast immer der Fall sind. Ferner können beim nachträglichen Beschichten auch etwaige Schnittkanten am Blechmaterial mit abgedeckt werden. Wegen der gleichmäßig aufgebrachten und die Sichtkanten mit abdeckenden Korrosionsschutzbeschichtung ist das hergestellte Blechformteil auch optisch gefällig und somit insbesondere auch im Sichtbereich einsetzbar.

Gemäß einer bevorzugten Weiterbildung ist vorgesehen, dass das elektrolytische Aufbringen der Zink-Nickel-Beschichtung in einem Tauchbad mit einer geeigneten Elektrolytlösung erfolgt. Hierunter ist zu verstehen, dass das Blechformteil zum Aufbringen der Zink-Nickel-Beschichtung nicht in mehrere unterschiedliche Tauchbäder eingebracht werden muss, obgleich auch dies möglich wäre.

Gemäß einer bevorzugten Weiterbildung ist vorgesehen, dass das Umformen ein Warmumformen ist. Hierunter ist bevorzugt zu verstehen, dass das Stahlblechmaterial vor dem Umformen oder vor einer einzelnen wie insbesondere der letzten Umformstufe auf eine Temperatur oberhalb der Rekristallisationstemperatur erwärmt wird (bspw. ca. 900° C). Hierzu ist vorgesehen, dass das Ausgangsblechmaterial ein warmumformgeeignetes Stahlblechmaterial ist.

Gemäß einer bevorzugten Weiterbildung ist vorgesehen, dass das Blechformteil bzw. dessen Blechmaterial vor dem elektrolytischen Aufbringen der Zink-Nickel-Beschichtung gehärtet wird. Hierzu ist vorgesehen, dass das Ausgangsblechmaterial ein härtbares Stahlblechmaterial ist. Bei diesem Härten wird insbesondere die Zugfestigkeit des Stahlblechmaterials erhöht, so dass dieses zumindest nach dem Härten höherfeste Eigenschaften aufweist. Bevorzugt erfolgt das Härten in Kombination mit dem zuvor erläuterten Warmumformen (Warmumformhärtung).

Gemäß einer besonders bevorzugten Weiterbildung ist vorgesehen, dass das Umformen ein Presshärten des Blechformteils, genau genommen des Stahlblechmaterials des Blechformteils, einschließt. Hierzu ist vorgesehen, dass das Ausgangsblechmaterial ein presshärtungsgeeignetes Stahlblechmaterial ist, wie z. B. ein 16MnB5, ein 19MnB5 oder ein 22MnB5. Zum Presshärten sind derzeit zwei Vorgehensweisen möglich: gemäß der ersten Vorgehensweise wird eine erwärmte Platine des Ausgangsmaterials in das Umformwerkzeug eingelegt, hierin umgeformt und gleichzeitig oder nachfolgend unter Druck abgekühlt bzw. pressgehärtet. Gemäß der zweiten Vorgehensweise wird aus der Platine zunächst durch Umformen ein Zwischen-Blechformteil erzeugt (Vorformen), welches dann erwärmt und in das Presshärtewerkzeug eingelegt wird, wo unter einer nur noch geringen Formänderung das Presshärten erfolgt.

Ein wesentlicher Vorteil des erfindungsgemäßen Verfahrens unter Anwendung des Presshärtens ist darin zu sehen, dass ein blankes Ausgangsblechmaterial verwendbar ist und dass die nachfolgend elektrolytisch aufgebrachte Zink-Nickel-Beschichtung einen hohen bis sehr hohen Reinheitsgrad aufweist, mit Vorteilen für den Korrosionsschutz und für die Lackierfähigkeit. Ein derartiges Blechformteil ist außerdem optisch gefällig und somit, insbesondere an einem Kraftfahrzeug, auch im Sichtbereich einsetzbar.

Gemäß einer bevorzugten Weiterbildung ist vorgesehen, dass die Zink-Nickel-Beschichtung mit einer Gesamtschichtdicke von kleiner oder gleich 15 µm aufgebracht wird. Besonders bevorzugt ist vorgesehen, dass die Gesamtschichtdicke größer oder gleich 5 µm und kleiner oder gleich 15 µm ist und insbesondere in etwa 7,5 µm beträgt. Durch diese verhältnismäßig geringen Gesamtschichtdicken (die ausgebildeten Schichtdicken beim Feuerverzinken können z. B. bis 300 µm betragen) bleibt die Schweißfähigkeit des Stahlblechmaterials erhalten. Ein Vorteil des elektrolytischen Beschichtens ist auch darin zu sehen, dass die Zink-Nickel-Beschichtung sehr homogen aufbringbar und die Gesamtschichtdicke sehr präzise einstellbar ist.

Gemäß einer bevorzugten Weiterbildung ist vorgesehen, dass nach dem elektrolytischen Aufbringen der Zink-Nickel-Beschichtung das beschichtete Blechformteil einer Wärmebehandlung unterzogen wird. Diese Wärmebehandlung erfolgt im Anschluss und insbesondere unmittelbar im Anschluss an das elektrolytische Aufbringen der Zink-Nickel-Beschichtung. Das Wärmebehandeln dient dazu, den im Ausgangsblechmaterial enthaltenen Wasserstoff und den eventuell beim Aufbringen der Zink-Nickel-Beschichtung in das Stahlblechmaterial eingebrachten Wasserstoff (wobei dies durch die anfänglich abgeschiedene dünne Nickelschicht im Wesentlichen verhindert werden soll) auszutreiben. Wasserstoff gilt allgemein als Stahlschädling, weil er eine Versprödung des Stahlblechmaterials, die so genannte Wasserstoffversprödung, herbeiführt. Das Wärmebehandeln führt dazu, dass die im Gefüge des Stahlblechmaterials eingelagerten Wasserstoff-Atome durch Effusion ausgetrieben werden. Damit kann der Wasserstoffversprödung des Stahlblechmaterials entgegen gewirkt werden.

Gemäß einem weiteren Aspekt dient die Wärmebehandlung auch dazu, in vorteilhafter Weise das Stahlblechmaterial zu vergüten, so dass eine Gefügeverbesserung eintritt und dieses eine hohe Festigkeit bei gleichzeitig hohen Zähigkeitseigenschaften erreicht. Hierdurch können sich z. B. an einem sicherheitsrelevanten Bauteil dessen Crash-Eigenschaften verbessern.

Bevorzugt erfolgt die Wärmebehandlung in einem Wärmebehandlungsofen. Ein Wärmebehandlungsofen kann ein herkömmlicher Wärmebehandlungsofen (Kammerofen) oder aber auch ein Durchlaufofen sein. Ein Durchlaufofen umfasst bevorzugt einen Eingangs- und einen Ausgangsschleusenbereich und einen dazwischenliegenden Transferabschnitt. Zudem können in einem Durchlaufofen unterschiedliche Temperaturzonen für die Wärmebehandlung bereitgehalten werden. Ein Wärmedurchlaufofen ermöglicht eine hohe Stückzahl.

Gemäß einer bevorzugten Weiterbildung ist vorgesehen, dass die Temperatur bei der Wärmebehandlung mehr als 100° C beträgt, bevorzugt mehr als 150° C beträgt und insbesondere zwischen 180° C und 200° C liegt. Idealerweise sollte die Temperatur nicht mehr als 220° C betragen, um eine Beschädigung der Zink-Nickel-Beschichtung auszuschließen.

Gemäß einer bevorzugten Weiterbildung ist vorgesehen, dass die Zeitdauer der Wärmebehandlung bis zu mehreren Stunden betragen kann. Die Zeitdauer beträgt z. B. bis zu 1 h, bevorzugt bis zu 2 h, besonders bevorzugt bis zu 5 h, insbesondere bis zu 10 h und insbesondere bevorzugt bis zu 50 h.

Gemäß einer bevorzugten Weiterbildung ist vorgesehen, dass die Wärmebehandlung in einer Schutzgasatmosphäre oder in einem Vakuum erfolgt, um eine Beschädigung und insbesondere Oxidation der elektrolytisch aufgebrachten Zink-Nickel-Beschichtung zu vermeiden. Eine Schutzgasatmosphäre kann z. B. Stickstoff und/oder Argon enthalten, wobei es sich auch um ein Schutzgasgemisch handeln kann.

Die Lösung der Aufgabe erstreckt sich auch auf ein warmumgeformtes und insbesondere pressgehärtetes Blechformteil mit einer Korrosionsschutzbeschichtung, wobei vorgesehen ist, dass die Korrosionsschutzbeschichtung eine im Anschluss an die Formgebung (Umformung des Ausgangsblechmaterials zum Blechformteil) elektrolytisch aufgebrachten Zink-Nickel-Beschichtung ist, die aus einer dünnen, direkt auf dem Stahlblechmaterial abgeschiedenen Nickelschicht (Unterschicht, Trennschicht) und einer darüber befindlichen Deckschicht aus einer Zink-Nickel-Mischphase besteht. Bei diesem Blechformteil handelt es sich insbesondere um ein Struktur- und/oder um ein Sicherheitsbauteil für ein Kraftfahrzeug, wobei ein solches Struktur- und/oder Sicherheitsbauteil bspw. ein Türaufprallträger, eine A- oder B-Säule, ein Längs- oder Querträger, eine Stoßfängerverstärkung oder dergleichen ist.

Wie bereits oben erläutert, wurden solche Blechformteile wegen des beim elektrolytischen Beschichten eingebrachten Wasserstoffs und der damit einhergehenden Gefahr einer Wasserstoffversprödung bislang nicht elektrolytisch beschichtet und insbesondere nicht elektrolytisch verzinkt. Dies gilt vor allem für pressgehärtete Blechformteile im Kraftfahrzeugbau. Durch die zunächst auf dem blanken Stahlblechmaterial abgeschiedene dünne Nickelschicht kann eine solche Wasserstoffversprödung verhindert werden, so dass es gelingt, die mit dem elektrolytischen Beschichten einhergehenden Vorteile (homogener Schichtauftrag, Einstellbarkeit der Schichtdicke, gute Abriebfestigkeit, etc.) auch für warmumgeformte und insbesondere pressgehärtete Blechformteile nutzbar zu machen. Das erfindungsgemäße Blechformteil ist insbesondere nach dem erfindungsgemäßen Verfahren hergestellt.

Die Erfindung wird nachfolgend anhand der Figuren beispielhaft näher erläutert. Es zeigen:
- Fig. 1: ein erfindungsgemäßes Blechformteil in einer Draufsicht;
- Fig. 2: ein erfindungsgemäßes Verfahren zum Herstellen des Blechformteils aus der Fig. 1 in einer schematischen Ablaufdarstellung; und
- Fig. 3: eine gemäß der Erfindung auf einem höherfesten Stahlblechmaterial aufgebrachte Zink-Nickel-Beschichtung in einer schematischen, nicht maßstabsgerechten Schnittansicht.

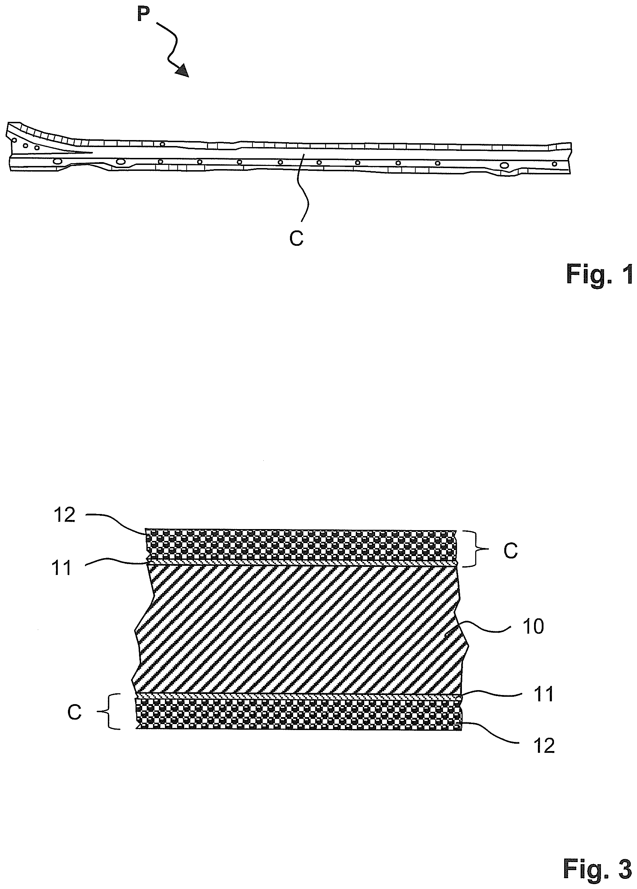

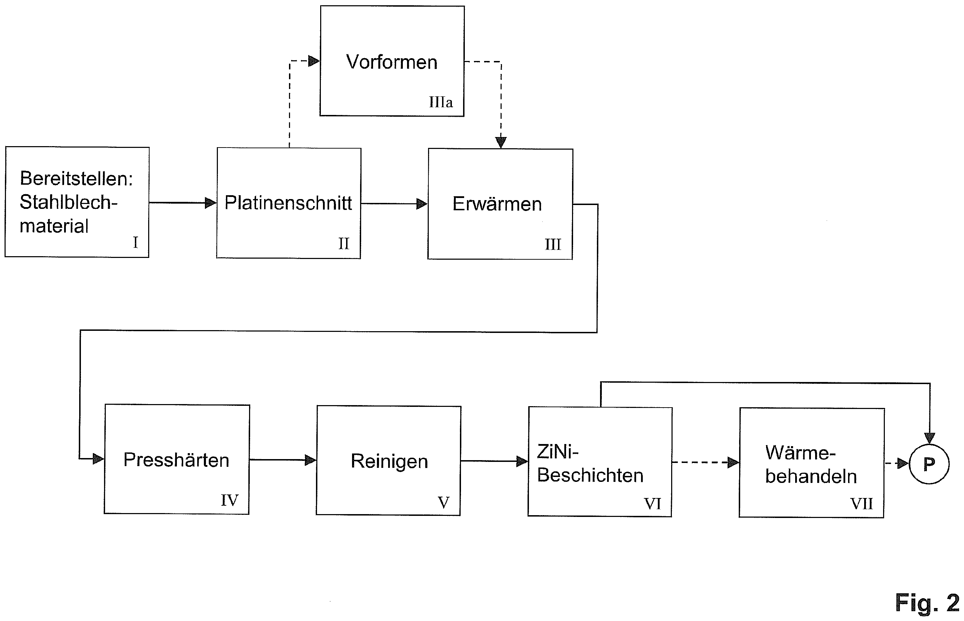

**Fig. 1** zeigt ein pressgehärtetes Blechformteil P aus einem höherfesten Stahlblechmaterial mit einer elektrolytisch aufgebrachten Korrosionsschutzbeschichtung, wobei die Korrosionsschutzbeschichtung eine Zink-Nickel-Beschichtung C ist, wie nachfolgend näher erläutert. Bei dem Blechformteil P handelt es sich beispielhaft um ein Verstärkungsteil für einen Seitenschweller eines Kraftfahrzeugs. Nachfolgend wird im Zusammenhang mit der **Fig. 2** ein erfindungsgemäßes Verfahren zum Herstellen eines derartigen Blechformteils P erläutert.

Das Verfahren beginnt im Schritt I mit der Bereitstellung eines Ausgangsblechmaterials, wobei es sich um ein für das Presshärten geeignetes Stahlblechmaterial handelt. Das Ausgangsblechmaterial kann z. B. als Coil oder in Form von Einzelplatinen bereitgestellt werden. Im Schritt II wird aus dem ebenen Ausgangsblechmaterial ein Platinenzuschnitt erzeugt, wobei die Schnittgeometrie idealerweise so gewählt ist, dass nachfolgend keine weiteren Schnittoperationen erforderlich sind.

Im Schritt III wird der Platinenzuschnitt erwärmt, was idealerweise in einem Durchlaufofen erfolgt. Diesem Erwärmen kann im Schritt IIIa optional ein Vorformen des Platinenzuschnitts zu einem Zwischen-Blechformteil erfolgen, wobei dieses Zwischen-Blechformteil annähernd die Endgeometrie des herzustellenden Blechformteils P aufweisen kann. Im Anschluss an das Erwärmen des Platinenzuschnitts oder des Zwischen-Blechformteils erfolgt im Schritt IV das Presshärten in einem Presshärtewerkzeug, um ein pressgehärtetes Blechformteil zu erhalten.

Im Anschluss an das Presshärten wird das pressgehärtete Blechformteil im Schritt V gereinigt, um Verunreinigungen wie insbesondere Brandrückstände und Oxidschichten zu entfernen. Unmittelbar im Anschluss an das Reinigen wird das pressgehärtete und metallisch blanke Blechformteil im Schritt VI in einem Tauchbad mit einer Elektrolytlösung vollflächig mit der Zink-Nickel-Beschichtung C versehen, wobei zu Beginn des Beschichtungsvorgangs zunächst eine dünne Nickelschicht abgeschieden wird, die im Weiteren eine Wasserstoffversprödung des Stahlblechmaterials verhindert. Hiernach ist das pressgehärtete und mit einer Korrosionsschutzbeschichtung versehene Blechformteil P im Wesentlichen verbaufertig.

Optional kann im Anschluss an das elektrolytische Aufbringen der Zink-Nickel-Beschichtung C eine Wärmebehandlung vorgesehen sein (Schritt VII). Das Wärmebehandeln dient vorrangig dazu, einen eventuell im Stahlblechmaterial enthaltenen Wasserstoff auszutreiben, um einer Wasserstoffversprödung entgegen zu wirken, wie oben ausführlich erläutert. Durch das Wärmebehandeln kann ferner auch eine Vergütung des Stahlblechmaterials erfolgen. Aufgrund der vollflächig aufgebrachten Zink-Nickel-Beschichtung C kann sich auch zu einem späteren Zeitpunkt kein Wasserstoff im Stahlblechmaterial mehr einlagern.

Das beispielhaft erläuterte Verfahren kann weitere hier nicht erläuterte Schritte und Zwischenschritte umfassen, wie z. B. Beschnittoperationen nach dem Umformen, Zwischenreinigungsmaßnahmen, Beölungsmaßnahmen etc.

**Fig. 3** zeigt eine auf ein Stahlblechmaterial (Substrat) 10 aufgebrachte Zink-Nickel-Beschichtung C. Die Zink-Nickel-Beschichtung C besteht aus einer dünnen, direkt auf dem Stahlblechmaterial 10 aufgebrachten reinen Nickelschicht (Unterschicht) 11, die beim elektrolytischen Beschichten anfänglich abgeschieden wird und die ein Eindringen von Wasserstoff in das Stahlblechmaterial 10 verhindert, und einer darüber befindlichen, abschließenden Deckschicht 12 aus einer Zink-Nickel-Mischphase. Die Schichtdicke der Nickelschicht 11 beträgt z. B. wenige Nanometer (oder weniger), die Gesamtschichtdicke der Zink-Nickel-Beschichtung C beträgt z. B. wenige Mikrometer, wie oben angegeben.

## Patentansprüche

1. Verfahren zum Herstellen eines mit einer Korrosionsschutzbeschichtung versehenen und aus einem höherfesten Stahlblechmaterial (10) gebildeten Blechformteils, umfassend die folgenden Schritte:
- Umformen eines bereitgestellten Ausgangsblechmaterials zu einem Blechformteil;
- Ausbildung der Korrosionsschutzbeschichtung im Anschluss an die Formgebung;
**dadurch gekennzeichnet, dass**
die Korrosionsschutzbeschichtung durch elektrolytisches Aufbringen einer Zink-Nickel-Beschichtung (C) auf das Blechformteil ausgebildet wird, wobei zu Beginn des Beschichtungsvorgangs zunächst eine dünne Nickelschicht (11) abgeschieden wird, die im Weiteren eine Wasserstoffversprödung des Stahlblechmaterials (10) verhindert.

2. Verfahren nach Anspruch 1,
**dadurch gekennzeichnet, dass**
das elektrolytische Aufbringen der Zink-Nickel-Beschichtung (C) in einem Tauchbad mit einer Elektrolytlösung erfolgt.

3. Verfahren nach Anspruch 1 oder 2,
**dadurch gekennzeichnet, dass**
das Umformen ein Warmumformen ist.

4. Verfahren nach einem der vorausgehenden Ansprüche,
**dadurch gekennzeichnet, dass**
das Blechformteil vor dem elektrolytischen Aufbringen der Zink-Nickel-Beschichtung (C) gehärtet wird.

5. Verfahren nach einem der vorausgehenden Ansprüche,
**dadurch gekennzeichnet, dass**
das Umformen ein Presshärten einschließt.

6. Verfahren nach einem der vorausgehenden Ansprüche,
**dadurch gekennzeichnet, dass**
die Zink-Nickel-Beschichtung (C) mit einer Gesamtschichtdicke von ≤ 15 µm aufgebracht wird.

7. Verfahren nach einem der vorausgehenden Ansprüche,
**dadurch gekennzeichnet, dass**
nach dem elektrolytischen Aufbringen der Zink-Nickel-Beschichtung (C) das beschichtete Blechformteil einer Wärmebehandlung unterzogen wird.

8. Verfahren nach Anspruch 7,
**dadurch gekennzeichnet, dass**
die Temperatur der Wärmebehandlung zwischen 180° C und 200° C beträgt.

9. Verfahren nach Anspruch 7 oder 8,
**dadurch gekennzeichnet, dass**
die Zeitdauer der Wärmebehandlung mehrere Stunden beträgt.

10. Verfahren nach Anspruch 7, 8 oder 9,
**dadurch gekennzeichnet, dass**
die Wärmebehandlung in einer Schutzgasatmosphäre oder in einem Vakuum erfolgt.

11. Warmumgeformtes und insbesondere pressgehärtetes Blechformteil (P) aus einem Stahlblechmaterial (10) mit einer im Anschluss an die Formgebung aufgebrachten Korrosionsschutzbeschichtung,
**dadurch gekennzeichnet, dass**
die Korrosionsschutzbeschichtung eine im Anschluss an die Formgebung elektrolytisch aufgebrachten Zink-Nickel-Beschichtung (C) ist, die aus einer dünnen, direkt auf dem Stahlblechmaterial (10) abgeschiedenen Nickelschicht (11), die beim Beschichtungsvorgang eine Wasserstoffversprödung des Stahlblechmaterials (10) verhindert, und einer darüber befindlichen Deckschicht (12) aus einer Zink-Nickel-Mischphase besteht.

12. Warmumgeformtes und insbesondere pressgehärtetes Blechformteil (P) nach Anspruch 11,
**dadurch gekennzeichnet, dass**
dieses ein Struktur- und/oder Sicherheitsbauteil für ein Kraftfahrzeug ist.

13. Warmumgeformtes und insbesondere pressgehärtetes Blechformteil (P) nach Anspruch 11 oder 12,
**gekennzeichnet dadurch, dass**
dieses nach dem Verfahren gemäß einem der vorausgehenden Ansprüche 1 bis 10 hergestellt ist.

## Claims

1. A method for producing a shaped sheet metal part provided with an anti-corrosion coating and formed from a higher-strength steel sheet material (10), comprising the following steps:
- shaping a provided starting sheet metal material into a shaped sheet metal part;
- forming the anti-corrosion coating following the shaping;
**characterised in that**
the anti-corrosion coating is formed by electrolytic application of a zinc/nickel coating (C) to the shaped sheet metal part, wherein at the beginning of the coating operation first of all a thin nickel layer (11) is deposited which subsequently prevents hydrogen embrittlement of the steel sheet material (10).

2. A method according to Claim 1,
**characterised in that**
the electrolytic application of the zinc/nickel coating (C) takes place in a dipping bath with an electrolyte solution.

3. A method according to Claim 1 or Claim 2,
**characterised in that**
the shaping is hot shaping.

4. A method according to one of the preceding claims,
**characterised in that**
the shaped sheet metal part is hardened prior to the electrolytic application of the zinc/nickel coating (C).

5. A method according to one of the preceding claims,
**characterised in that**
the shaping includes press-hardening.

6. A method according to one of the preceding claims,
**characterised in that**
the zinc/nickel coating (C) is applied with a total layer thickness of < 15 µm.

7. A method according to one of the preceding claims,
**characterised in that**
after the electrolytic application of the zinc/nickel coating (C) the coated shaped sheet metal part is subjected to heat treatment.

8. A method according to Claim 7,
**characterised in that**
the temperature of the heat treatment is between 180°C and 200°C.

9. A method according to Claim 7 or Claim 8,
**characterised in that**
the duration of the heat treatment is several hours.

10. A method according to Claim 7, 8 or 9,
**characterised in that**
the heat treatment takes place in a protective gas atmosphere or in a vacuum.

11. A hot-formed and especially press-hardened shaped sheet metal part (P) made from a steel sheet material (10) with an anti-corrosion coating applied following the shaping,
**characterised in that**
the anti-corrosion coating is a zinc/nickel coating (C) electrolytically applied following the shaping, which coating consists of a thin nickel layer (11) deposited directly on the steel sheet material (10), which layer in the coating operation prevents hydrogen embrittlement of the steel sheet material (10), and a top layer (12) made of a zinc/nickel mixed phase which is located thereover.

12. A hot-formed and in particular press-hardened shaped sheet metal part (P) according to Claim 11,
**characterised in that**
it is a structural and/or safety component for a motor vehicle.

13. A hot-formed and in particular press-hardened shaped sheet metal part (P) according to Claim 11 or Claim 12,
**characterised in that**
it is produced in accordance with the method according to one of the preceding Claims 1 to 10.

## Revendications

1. Procédé d'obtention d'une pièce façonnée en tôle équipée d'un revêtement de protection anticorrosion et réalisée en un matériau en tôle d'acier (10) de grande résistance, comportant les étapes suivantes consistant à :
- mettre en forme un matériau en tôle de départ fourni pour obtenir une pièce façonnée en tôle,
- former le revêtement de protection anticorrosion à la suite de la mise en forme,
**caractérisé en ce que**
le revêtement de protection anticorrosion est formé par application électrolytique d'un revêtement zinc-nickel (C) sur la pièce façonnée en tôle, au début du processus de revêtement étant tout d'abord déposée, une mince couche de nickel (11) qui empêche ensuite une fragilisation par l'hydrogène du matériau en tôle d'acier (10).

2. Procédé conforme à la revendication 1,
**caractérisé en ce que**
l'application électrolytique du revêtement zinc-nickel (C) est effectuée dans un bain de trempage renfermant un électrolyte.

3. Procédé conforme à la revendication 1 ou 2,
**caractérisé en ce que**
la mise en forme est une mise en forme thermique.

4. Procédé conforme à l'une des revendications précédentes,
**caractérisé en ce que**
la pièce façonnée en tôle est durcie avant le dépôt électrolytique du revêtement zinc-nickel (C).

5. Procédé conforme à l'une des revendications précédentes,
**caractérisé en ce que**
la mise en forme comporte une trempe sous pression.

6. Procédé conforme à l'une des revendications précédentes,
**caractérisé en ce que**
le revêtement zinc-nickel (C) est appliqué sur une épaisseur de couche totale ≤ 15 µm.

7. Procédé conforme à l'une des revendications précédentes,
**caractérisé en ce que**
après l'application électrolytique du revêtement zinc-nickel (C), la pièce façonnée en tôle revêtue est soumise à un traitement thermique.

8. Procédé conforme à la revendication 7,
**caractérisé en ce que**
la température du traitement thermique est comprise entre 180°C et 200°C.

9. Procédé conforme à la revendication 7 ou 8,
**caractérisé en ce que**
la durée du traitement thermique est de plusieurs heures.

10. Procédé conforme à la revendication 7, 8 ou 9,
**caractérisé en ce que**
le traitement thermique est effectué sous une atmosphère d'un gaz de protection ou sous vide.

11. Pièce façonnée en tôle (P) mise en forme thermiquement et en particulier trempée sous pression réalisée en un matériau en tôle d'acier (10) et équipée d'un revêtement de protection anticorrosion appliqué à la suite de la mise en forme,
**caractérisée en ce que**
le revêtement de protection anticorrosion est un revêtement zinc-nickel (C) appliqué par électrolyse à la suite de la mise en forme, qui est constitué par une mince couche de nickel (11) directement déposée sur le matériau en tôle d'acier (10), qui empêche lors du processus de revêtement une fragilisation par l'hydrogène du matériau en tôle d'acier (10) et par une couche de recouvrement (12) située au-dessus de celle-ci constituée par une phase mixte zinc-nickel.

12. Pièce façonnée en tôle (P) mise en forme thermiquement et en particulier trempée sous pression conforme à la revendication 11,
**caractérisée en ce qu'**
elle est constituée par un élément de structure et/ou de sécurité d'un véhicule.

13. Pièce façonnée en tôle (P) mise en forme thermiquement et en particulier trempée sous pression conforme à la revendication 11 ou 12,
**caractérisée en ce qu'**
elle est obtenue par la mise en oeuvre d'un procédé conforme à l'une des revendications 1 à 10.
